# EUROPEAN PATENT SPECIFICATION

(11) **EP 1 800 939 B1**
(45) Date of publication and mention of the grant of the patent: **26.08.2009**
(21) Application number: 07104560.3
(22) Date of filing: 19.07.2001
(51) Int. Cl.: B60N 2/28

(54) **Child seat base**
Basis für einen Kindersitz
Support pour siège enfant

(30) Priority: 09.08.2000 JP 2000241519
(43) Date of publication of application: 27.06.2007
(62) Divisional of application: 01116748.3
(73) Proprietor: TAKATA CORPORATION, Minato-ku, Tokyo 106-8510 (JP)
(72) Inventor: Hiramatsu, Koji c/o Takata Corporation, Tokyo 106-8510 (JP); Yamanishi, Takahiro c/o Takata Corporation, Tokyo 106-8510 (JP)
(74) Representative: Banzer, Hans-Jörg

(56) References cited:
- EP-A- 0 164 909
- EP-A- 0 791 500
- EP-A- 0 813 992
- DE-U- 29 812 319
- FR-A- 2 348 835
- FR-A- 2 741 847

## Description

### [Technical Field of the Invention]

The present invention relates to a child seat base for fixing a child seat on a seat of a vehicle. More particularly, the present invention relates to a child seat base which provides the advantages, for example, easy storage and carriage, or easy height adjustment.

### [Description of the Related Art]

There are provided, broadly, two types of child seats to be placed on the seat of a vehicle, that is, an infant seat adapted for infants of less than 10 kg in weight, and a child seat adapted for toddlers of 9 kg to 19 kg in weight. The infant seat is placed so that an infant sitting therein faces toward the back of the vehicle. The child seat is placed so that a toddler sitting therein faces toward the front of the vehicle, in a manner similar to that of a normal seat. The weight of the infant seat is approximately 4 kg, and the weight of the child seat is approximately 4.5 kg.

In general, infant seats for infants and child seats for toddlers are generically named "child seats". In this specification, the child seat also refers to both seats.

A child seat base is used to fix such a child seat on the seat of the vehicle. The base has a base body shaped like a rectangular plate. The base body is provided with a fixing member for detachably fixing the child seat. A lifting stopper is pivotally mounted on the upper rear surface of the base body. The lifting stopper functions as a member for preventing the base member from lifting. A pair of right and left arms are disposed on both rear ends of the base body. The arms extend backward from the rear end of the base body in a horizontal direction, and each of the arms has a hook-shaped connecting portion at its leading end.

The base body of the child seat base is fixed by connecting the connecting portions of the right and left arms to an anchor on the seat of the vehicle and shifting the lifting stopper in accordance with the angle of the rear surface of the seat of the vehicle. Then, the child seat is fixed on the upper surface of the base body by the fixing member of the base member.

In recent years, such child seat bases have been rapidly become widespread since the advantages thereof are valued, that is, they are applied to both child seats for infants and children, and are light in weight because they are separated from the child seats, or they allow the child seat to be easily fixed on the seat of the vehicle.

### [Problems to be Solved by the Invention]

In order to inhibit the child seat from tilting frontward, the above-described child seat base is additionally provided with a support leg or a tether strap. However, since a conventional support leg does not have any mechanism for easy detachment from the base, it is too bulky to store, or it cannot be carried easily. Furthermore, since a screw-nut mechanism is used to adjust the height of the support leg according to the floors of various vehicles, the adjustment is troublesome and takes much time. In contrast, since the tether strap needs to be prepared in various ways according to the type of vehicle, it is not versatile.

A child seat base having the features of the preamble of independent claim 1 is known from FR 2 741 847 A1. This child seat base includes a positioning mechanism for locking the height of a support leg mounted on the front side of a base body of the child seat base at one of a plurality of levels. The positioning mechanism of this document comprises a locking screw or a locking bolt to adjust the support leg at a desired level.

From DE 298 12 319 U1 a further child seat base having a positioning mechanism for adjusting the height of a support leg of the child seat base is known. The positioning mechanism of this document includes lock springs which can also be used to attach the support leg to the child seat base.

Documents EP 0791 500 A2 and EP 0 164 909 A2 also disclose a child seat base having a support leg whose height can be adjusted with the aid of a corresponding positioning mechanism.

Finally, FR 2 348 835 A discloses a child seat base with a support leg mounted on the front side of the base body and a foot step mounted on the support leg. The height of the foot step can be adjusted in multiple levels, while the height of the support leg is fixed and cannot be adjusted.

The present invention has been made in view of the above problems, and an object of the invention is to provide a child seat base which provides the advantages of, for example, easy storage and carriage or easy height adjustment.

### [Means for Solving the Problems]

According to the present invention, the above problems are overcome by a child seat base as defined in claim 1. The dependent claims define preferred embodiments of the invention.

In order to overcome the above problems, a child seat base according to the present invention serves to fix a child seat on a seat of a vehicle, and includes a base body to be placed and fixed on the seat, and a support leg mounted on the front side of the base body so as to support the front portion of the base body on the floor of the vehicle.

In the child seat base of the present invention, the height of the support leg can be adjusted in multiple levels, and a positioning mechanism for locking the height of the support leg at each level can be released with a single motion.

According to the present invention, the height of the support leg can be adjusted with a single motion according to the heights of the floors of various types of vehicles. Therefore, the height of the child seat base can be easily adjusted in a short period.

### [Description of the Embodiments]

Description will be given below with reference to the drawings.
Fig. 1 is a perspective view showing the overall configuration of a child seat base according to an embodiment of the present invention.
Fig. 2 is a perspective view showing the structures of a pipe frame and a support leg in the child seat base according to the embodiment of the present invention.
Fig. 3 is an exploded perspective view of the child seat base according to the embodiment of the present invention.
Fig. 4(A) is a detailed sectional view of a connecting portion between a pipe base and a step guide pipe when they are connected, Fig. 4(B) is a detailed sectional view showing a state in which the connection is broken, and Fig. 4(C) is a sectional view showing another example of a connecting portion between the pipe base and the step guide pipe.
Fig. 5(A) is a detailed sectional view showing a state in which a foot-locking mechanism of the support leg is locked, and Fig. 5(B) is a detailed sectional view showing a state in which the foot-locking mechanism is unlocked.
Fig. 6(A) is a detailed sectional view showing a state in which a step-locking mechanism of the support leg is locked, and Fig. 6(B) is a detailed sectional view showing a state in which the step-locking mechanism is unlocked.
In the following description, the upward, downward, frontward, backward, leftward, and rightward directions are based on those in Figs. 1 and 2.

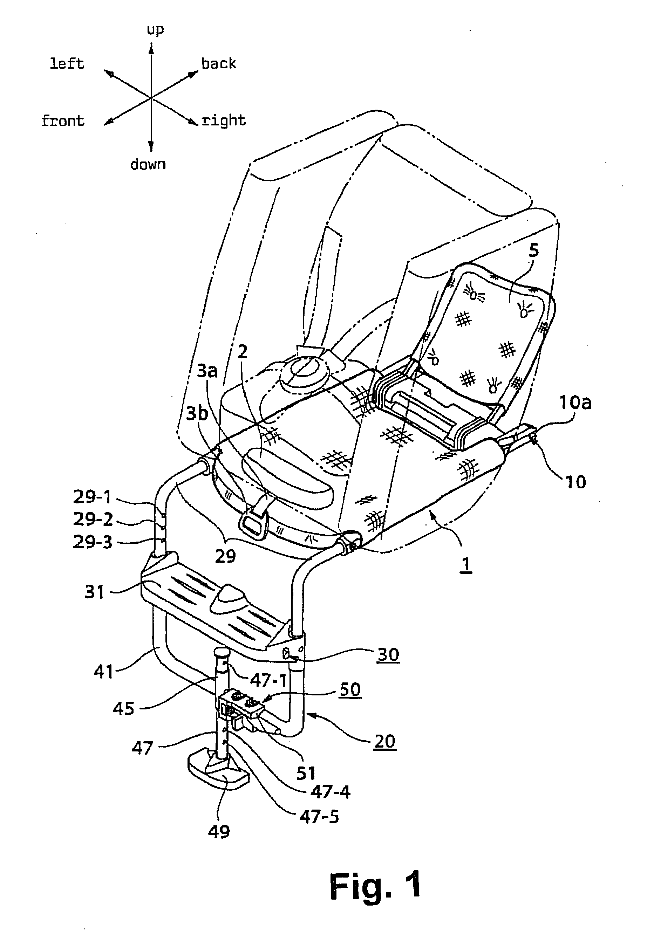

As shown in Fig. 1, the child seat base includes a base body 1 to be placed and fixed on a seat of a vehicle. The base body 1 has a hook 2, a belt 3a, and an operating piece 3b for detachably fixing a child seat (see two-dot chain lines in Fig. 1). On the rear side of the base body 1, a lifting stopper 5 is mounted so as to pivot frontward and downward. The lifting stopper 5 functions as a member for preventing the base body 1 from lifting.

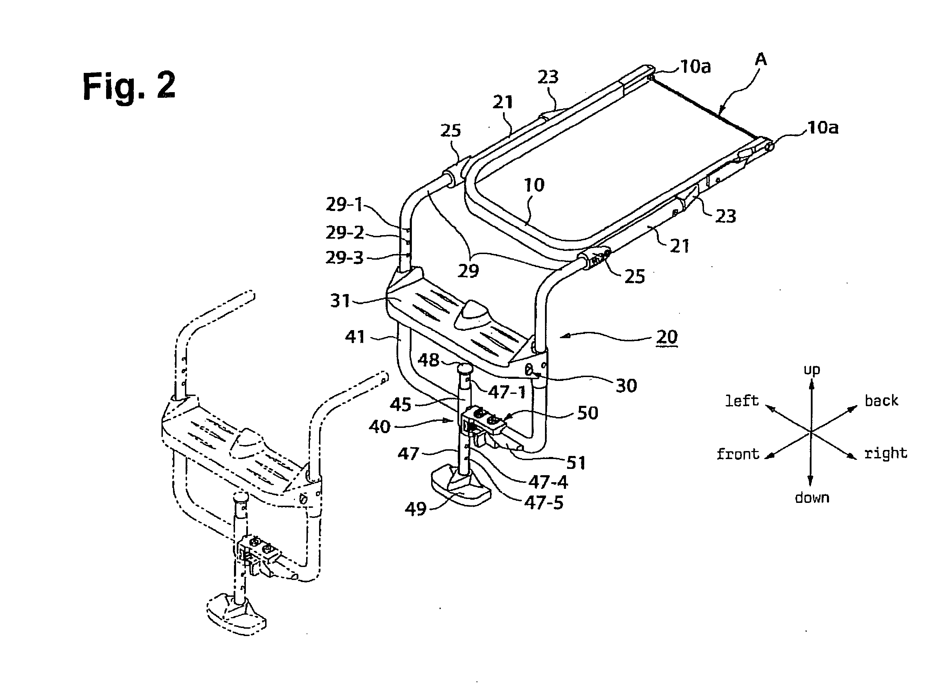

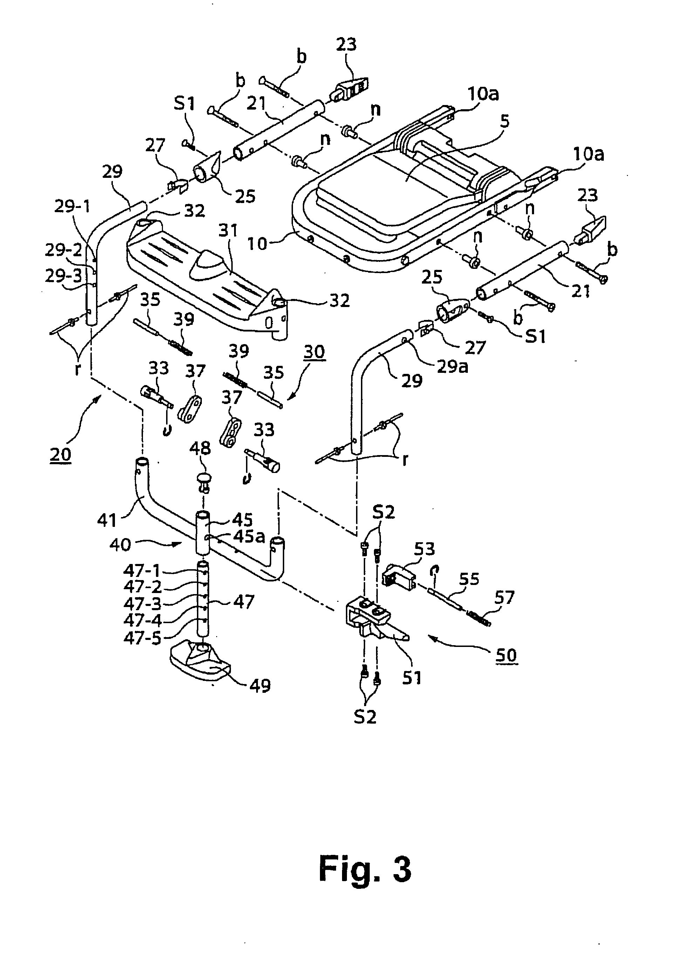

As is plainly shown in Figs. 2 and 3, the base body 1 has a U-shaped pipe frame 10. Hook-shaped connecting portions 10a are formed at both rear ends of the pipe frame 10. When fixing the base on the seat of the vehicle, the connecting portions 10a of the pipe frame 10 are connected to an anchor (shown by A in Fig. 2) on the seat of the vehicle.

The basic configuration of such a child seat base is similar to those disclosed in Japanese Patent Application Nos. 2000-38531 and 2000-106794.

As shown in Figs. 1 to 3, a support leg 20 is attached to the pipe frame 10 on the front side of the base body 1. The support leg 20 serves to support the front portion of the base body 1 on the floor of the vehicle. As is plainly shown in Figs. 2 and 3, the support leg 20 has a pair of right and left pipe bases 21. The right and left pipe bases 21 are fixed to the side portions of the pipe frame 10 with bolts "b" and nuts "n". An end cap 23 is fitted on the rear end of each pipe base 21. A pipe guide 25 is fixedly fitted on the front end of each pipe base 21 with a screw "s1", and the upper end of each step guide pipe 29 is detachably connected thereto. The step guide pipe 29 is L-shaped, and extends downward from the leading end of the pipe base 21. A lock spring 27 is placed inside the upper end portion of each step guide pipe 29.

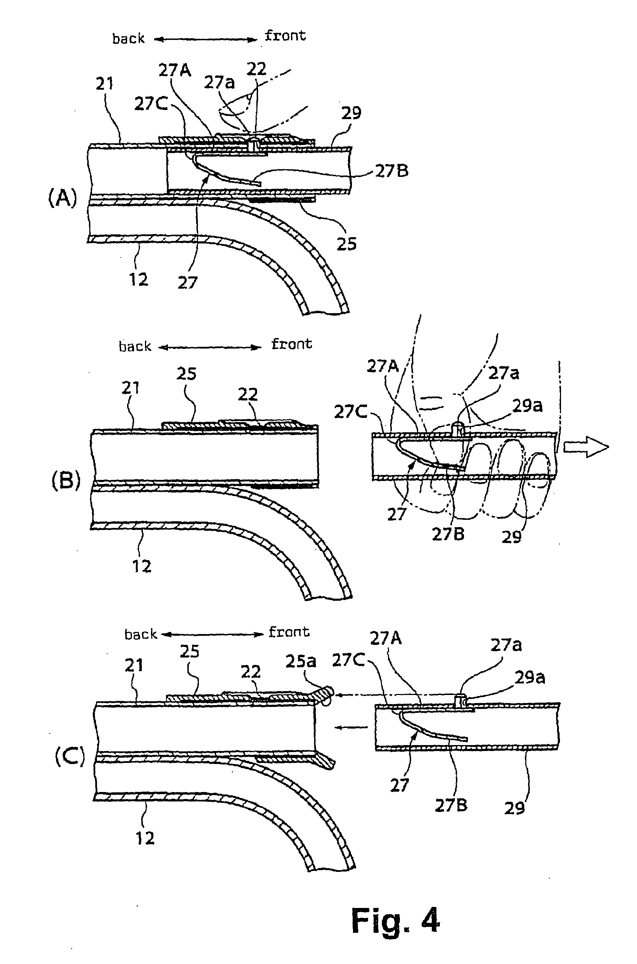

A connecting portion between the pipe base 21 and the step guide pipe 29 will now be described in detail with reference to Fig. 4.

The lock spring 27 is formed of an elbowed leaf spring, and includes a pivot end 27A having a projection 27a on a part of the outer surface, a support end 27B formed on the side opposite from the pivot end 27A, and a curve point 27C disposed therebetween. The projection 27a is retained in a hole 29a of the step guide pipe 29 so as to protrude from the outer surface of the step guide pipe 29. The support end 27B is positioned by the engagement of the projection 27a with the hole 29a. The projection 27a is engaged with a hole 22 of the pipe base 21 and the pipe guide 25 in a connected state shown in Fig. 4(A). The outer rim of the hole 22 is chamfered and tapered. When the projection 27a is pressed in the connected state shown in Fig. 4(A) and the step guide pipe 29 is drawn out of the pipe base 21, a disconnected state shown in Fig. 4(B) is brought about.

The action of the lock spring 27 will be described later.

Description with reference to Figs. 2 and 3 will be given again.

A T-shaped foot section 40 is placed at the bottom ends of the right and left step guide pipes 29. The foot section 40 has a foot pipe 41 for connecting the bottom ends of the right and left step guide pipes 29. The bottom ends of the right and left step guide pipes 29 and both ends of the foot pipe 41 are fixed by rivets "r". A pipe holder 45 vertically extending is fixed to the center of the foot pipe 41. An adjusting pipe 47 is slidably fitted in the pipe holder 45. A stopper 48 is fitted in the upper end of the adjusting pipe 47, and a foot 49 is fixed to the lower end thereof. The adjusting pipe 47 is prevented from falling off by the stopper 48 and the foot 49. A foot-locking mechanism 50 is mounted to the foot pipe 41 of the foot section 40 by screws "s2". The foot-locking mechanism 50 is engaged with a positioning hole 45a of the pipe holder 45 and positioning holes 47-1 to 47-5 of the adjusting pipe 47 so as to adjust the height of the support leg 20 in multiple levels (five levels in this embodiment) and to lock a height adjusting mechanism of the support leg 20 at each level.

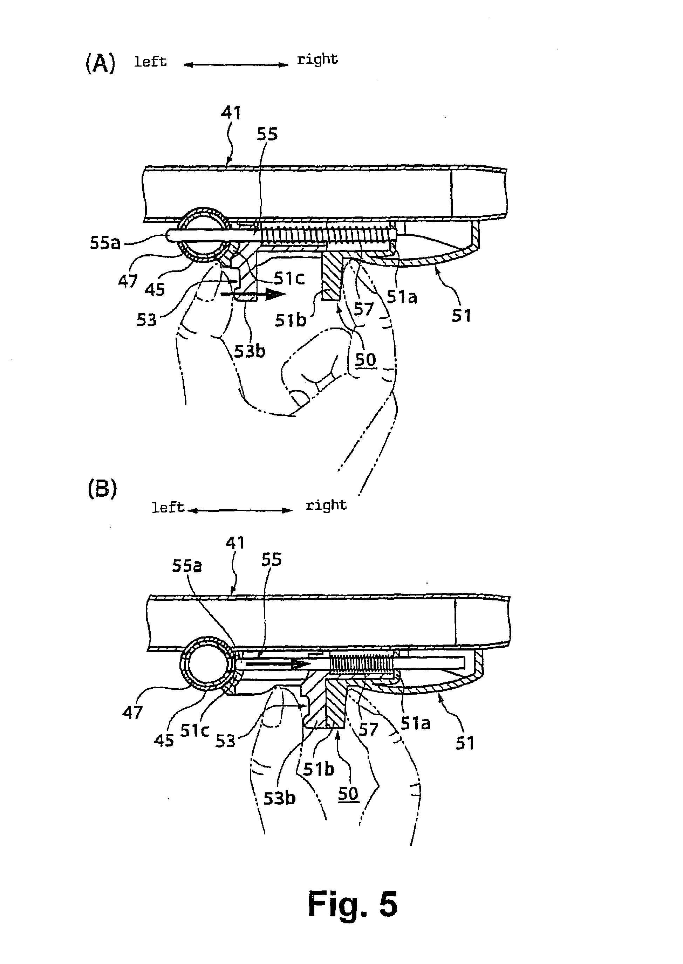

The foot-locking mechanism 50 will now be described in detail with reference to Fig. 5.

The foot-locking mechanism 50 comprises a foot-locking base 51, a foot-locking lever 53, a lock pin 55, and a spring 57. The foot-locking base 51 is fixed to the foot pipe 41 adjacent to the right side of the pipe holder 45 by screws "s2" (see Fig. 3). The foot-locking lever 53 is mounted in the foot-locking base 51 so as to slide rightward and leftward. The base 51 and the lever 53 respectively have lugs 51b and 53b. The lock pin 55 is placed inside the foot-locking base 51 and the foot-locking lever 53 so as to slide rightward and leftward.

The lock pin 55 is supported through right and left support ends 51a and 51c of the foot-locking base 51, and is integrally fixed to the foot-locking lever 53. The spring 57 is fitted on the lock pin 55. The spring 57 is incorporated in a compressed form between the support end 51a of the foot-locking base 51 and the foot-locking lever 53, and urges the foot-locking lever 53 and the lock pin 55 toward the pipe holder 45 (leftward in Fig. 5) in normal states (when no external force is applied). In this case, a front end 55a of the lock pin 55 protrudes outside through the pipe holder 45 (and the adjusting pipe 47) in the radial direction.

A method for operating the foot-locking mechanism 50 will be described later.

Description with reference to Figs. 2 and 3 will be given again.

A step 31 extends between the right and left step guide pipes 29. Support sleeves 32 are formed at both ends of the step 31. The step 31 can slide up and down with the support sleeves 32 fitted on the step guide pipes 29. A step-locking mechanism 30 is disposed at both right and left ends of the step 31. The step-locking mechanism 30 is engaged with positioning holes 29-1 to 29-3 of the step guide pipe 29 so as to adjust the height of the step 31 in multiple levels (three levels in this embodiment) and so as to lock the height of the step 31 at each level.

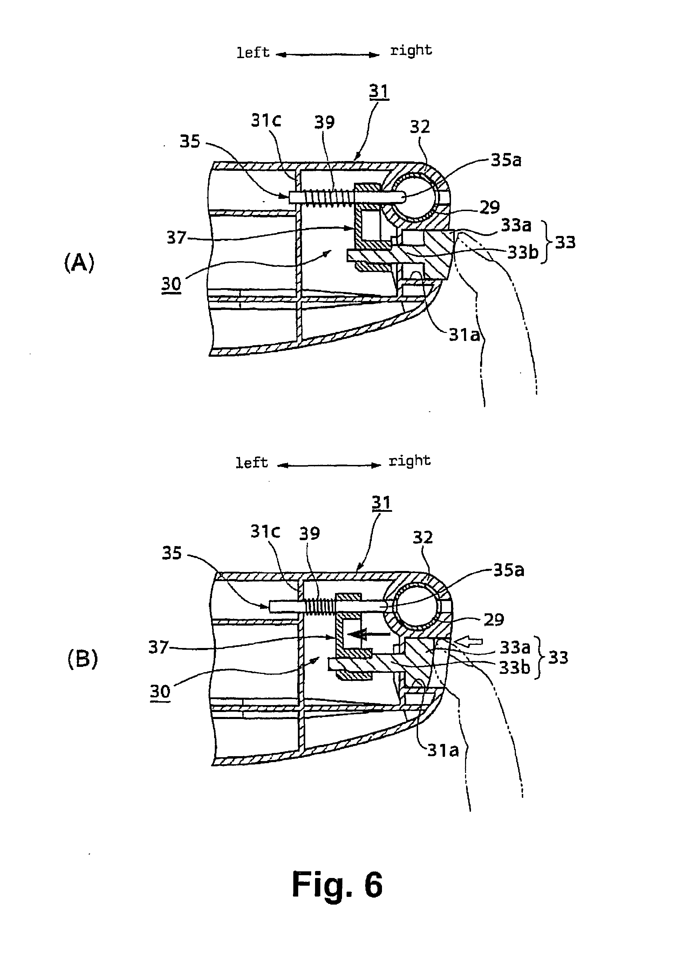

The step-locking mechanism 30 will now be described in detail with reference to Fig. 6.

The step-locking mechanism comprises a button 33, a pin 35, a joint 37, and a spring 39. The button 33 is made of a combination of a head portion 33a and a shaft portion 33b. The head portion 33a of the button 33 is slidably placed in a recess 31a formed on the side face of the step 31. The shaft portion 33b of the button 33 is slidably supported through the bottom surface of the recess 31a. The pin 35 slidably extends between the support sleeve 32 and a partition plate 31c.

The shaft portion 33b of the button 33 and the pin 35 are joined by the joint 37. The joint 37 allows the button 33 and the pin 35 to be drivingly connected to each other. The spring 39 is fitted on the pin 35. The spring 39 is placed in a compressed manner between the partition plate 31c and the joint 37, and urges the button 33 and the pin 35 toward the right and left side faces (the right side in Fig. 6) in normal states (when no external force is applied). In this case, a front end 35a of the pin 35 passes through the support sleeve 32 and enters the step guide pipe 29, and the head portion 33a of the button 33 protrudes outward from the side face of the step 31, as shown in Fig. 6(A).

A method for operating the step-locking mechanism 30 will be described later.

Next, a description will be given of a method for operating the support leg 20 in the child seat base with the above-described configuration.

First, operations of connecting and separating the base body 1 and the support leg 20 will be described.

Fig. 1 shows a state in which the support leg 20 is attached to the base body 1. In this case, as shown in Fig. 4(A), the pipe base 21 and the step guide pipe 29 are connected, and the projection 27a of the pivot end 27A of the lock spring 27 is engaged with the hole 22 of the pipe base 21 and the pipe guide 25. In order to disconnect the pipe base 21 and the step guide pipe 29 in this state, the projection 27a is pressed into the step guide pipe 29 manually or by other means. In this case, since the outer rim of the hole 22 is tapered, the projection 27a can be manually pressed with ease. Then, the leading end of the support end 27B of the lock spring 27 is turned on the curve point 27C into contact with the inner surface of the step guide pipe 29, and the pivot end 27A is bent, thereby disengaging the projection 27a from the hole 22.

When the step guide pipe 29 is drawn frontward from the pipe base 21 in this state, it is separated therefrom, as shown in Fig. 4(B). In this case, the pivot end 27A of the lock spring 27 is returned to its initial position by elasticity, and the projection 27a is engaged with the hole 29a of the step guide pipe 29. Thereby, the support leg 20 is detached from the base body 1, as shown by two-dot chain lines in Fig. 2.

In order to attach the support leg 20 to the base body 1, the upper end of the step guide pipe 29 is inserted into the front end of the pipe base 21 and is pushed until the projection 27a of the lock spring 27 abuts the open end face of the pipe base 21. Subsequently, the step guide pipe 29 is further pushed into the pipe base 21 while pressing the projection 27a protruding from the hole 29a of the step guide pipe 29. Then, the pivot end 27A of the lock spring 27 is bent, and the projection 27a is pressed against the inner surface of the pipe base 21. When the step guide pipe 29 is further pushed, the projection 27a and the hole 22 are aligned and engaged. Thereby, the pipe base 21 and the step guide pipe 29 are connected, and the support leg 20 can be attached to the base body 1.

As shown in Fig. 4(C), a tapered portion 25a may be formed at the end (the front end of the pipe base 21) of the pipe guide 25. In this case, since the projection 27a of the lock spring 27 is pressed in contact with the inner side face of the tapered portion 25a when the step guide pipe 29 is inserted into the pipe base 21, it need not be pressed manually or by other means.

Next, the adjustment of the height of the support leg 20 will be described.

The height of the support leg 20 is adjusted by the foot-locking mechanism 50 as follows.

In a locked state shown in Fig. 5(A), while the positioning hole 45a of the pipe holder 45 and a certain positioning hole (any of the positioning holes 47-1 to 47-5) of the adjusting pipe 47 are aligned, the lock pin 55 of the foot-locking mechanism 50 is engaged with the positioning holes. In this case, the lock pin 55 is pressed toward the pipe holder 45 (leftward in Fig. 5) together with the foot-locking lever 53 by the urging force of the spring 57, and the front end 55a of the lock pin 55 protrudes outside through the pipe holder 45 (and the adjusting pipe 47) in the radial direction. Therefore, the inner adjusting pipe 47 is fixed to the outer pipe holder 45 by the lock pin 55.

In order to release the locked state shown in Fig. 5(A), the foot-locking lever 53 is slid rightward (to the side opposite from the adjusting pipe 47) while pinching the lugs 51b and 53b of the foot-locking base 51 and the foot-locking lever 53. Then, the lock pin 55 integrally fixed to the foot-locking lever 53 is simultaneously slid rightward, is disengaged from the positioning holes of the pipe holder 45 and the adjusting pipe 47, and is brought into a state shown in Fig. 5(B). In this state, by sliding the adjusting pipe 47 along the pipe holder 45 while pinching the lugs 51b and 53b, any of the positioning holes 47-1 to 47-5 is selected corresponding to a desired height.

By releasing the lugs 51b and 53b when the selected positioning hole of the adjusting pipe 47 and the positioning hole 45a of the pipe holder 45 are aligned, the foot-locking lever 53 and the lock pin 55 are pressed leftward (toward the adjusting pipe 47) by the urging force of the spring 57, and are passed through the positioning holes. The lock state shown in Fig. 5(A) is thereby brought about, and the adjusting pipe 47 is positioned.

If the positioning holes of the adjusting pipe 47 and the pipe holder 45 are not aligned, the lock pin 55 cannot be passed therethrough, and the adjusting pipe 47 cannot be positioned. In order to visually check whether the lock pin 55 can be passed, a marking for clearly showing the position of the foot-locking lever 53 may be made on the surface of the foot pipe 41.

Next, the adjustment of the height of the step 31 of the support leg 20 will be described.

The height of the step 31 is adjusted by the step-locking mechanism 30 as follows.

As shown in Fig. 6(A), the pin 35 of the step-locking mechanism 30 is engaged with any of the positioning holes 29-1 to 29-3 of the step guide pipe 29, and the step 31 is positioned on the step guide pipe 29. In this case, the joint 37, and the button 33 and the pin 55 connected thereto are pressed outward (rightward in Fig. 6) by the urging force of the spring 39. In this case, the front end 35a of the pin 35 passes through the support sleeve 32 and enters the step guide pipe 29, and the head portion 33a of the button 33 protrudes outward from the side face of the step 31.

In order to release the lock state shown in Fig. 6(A), the head portions 33a of the right and left buttons 33 of the step 31 are pressed inward (leftward in Fig. 6). Then, the pin 35 connected to the shaft portion 33b of each button 33 via the joint 37 simultaneously slides inward. The pin 35 is thereby disengaged from the positioning hole of the step guide pipe 29, thereby bringing about a state shown in Fig. 6(B). By holding the step 31 from both right and left sides and sliding the step 31 along the step guide pipes 29 in this state while pressing the head portions 33a of the right and left buttons 33, any of the positioning holes 29-1 to 29-3 is selected corresponding to a desired height.

By releasing the buttons 33 when the selection of the positioning hole of each step guide pipe 29 is completed, the joints 37 are pressed outward by the urging force of the springs 39, the pins 35 and the buttons 33 slide outward, and the pins 35 are passed through the positioning holes of the step guide pipes 29. A lock state shown in Fig. 6(A) is thereby brought about, and the step 31 is positioned.

In this way, the child seat base of the present invention allows the support leg 20 to be attached to and detached from the base body 1 with a single motion. When the child seat base is stored, and is carried into and out of the vehicle, since the size and weight can be prevented from increasing by detaching the support leg 20 from the base body 1, handling efficiency is increased, and carrying operation is facilitated. Furthermore, the foot-locking mechanism 50 allows the height of the support leg 20 to be adjusted and determined for a short period with a single motion according to the heights of the floors of various types of vehicles. Alternatively, the step-locking mechanism 30 allows the height of the step to be adjusted and determined for a short period with a single motion in accordance with the physique of a person sitting in the child seat.

### [Advantages]

As is evident from the above description, the present invention provides the advantages of, for example, easy storage and carriage or easy height adjustment.

## Claims

1. A child seat base for fixing a child seat on a seat of a vehicle, said child seat base comprising:
a base body (1) to be placed and fixed on the seat;
a support leg (20) mounted on the front side of said base body (1) so as to support the front portion of said base body (1) on the floor of the vehicle, the support leg (20) comprising a vertically extending pipe holder (45) fixed to a foot pipe (41) of the support leg (20) and an adjusting pipe (47) slidably fitted in the pipe holder (45) with a foot (49) being fixed to a lower end of the adjusting pipe (47), wherein the height of the support leg (20) is adjustable in a plurality of levels, and
a positioning mechanism (50) for locking the height of the support leg (20) at one of the plurality of levels,
**characterized in that**
the positioning mechanism (50) comprises a foot-locking base (51) fixed to the foot pipe (41) of the support leg (20), a foot-locking lever (53) mounted at the foot-locking base (51) so as to be slidable towards the pipe holder (45) and away from the pipe holder (45), a lock pin (55) integrally fixed to the foot-locking lever (53), and a spring (57) being arranged in a compressed form between the foot-locking base (51) and the foot-locking lever (53) and urging the foot-locking lever (53) and the lock pin (55) towards the pipe holder(45),
wherein the foot-locking base (51) has a lug (51b) and the foot-locking lever (53) has a lug (53b),
wherein, in a locked state, the lock pin (55) is pressed towards the pipe holder (45) together with the foot-locking lever (53) by the urging force of the spring (57), so that a front end (55a) of the lock pin (55) protrudes through a hole (45a) of the pipe holder (45) and one of a plurality of positioning holes (47-1 ... 47-5) of the adjusting pipe (47) to adjust and lock the height of the support leg (20) at one of the plurality of levels, and
wherein the locked state is releasable by sliding the foot-locking lever (53) away from the pipe holder (45) while pinching the lugs (51b, 53b) of the foot-locking base (51) and the foot-locking lever (53) so as to disengage the lock pin (55) from the corresponding positioning hole (47-1 ... 47-5) of the adjusting pipe (47) and from the hole (45a) of the pipe holder (45).

2. The child seat base according to claim 1,
wherein the lock pin (55) is placed inside the food-locking base (51) and the foot-locking lever (53).

3. The child seat base according to claim 1 or claim 2,
wherein the lock pin (55) is supported through support ends (51a, 51c) of the foot-locking base (51).

4. The child seat base according to any one of the preceding claims,
wherein the spring (57) is fitted on the lock pin (55).

5. The child seat base according to claim 3 and claim 4,
wherein the spring (57) is incorporated in the compressed form between one of the support ends (51a) of the foot-locking base (51) and the foot-locking lever (53).

6. A child seat having a child seat base according to any one of the preceding claims.

## Patentansprüche

1. Kindersitzbasis zur Befestigung eines Kindersitzes auf einem Sitz eines Fahrzeugs, wobei die Kindersitzbasis umfasst:
einen Basiskörpers (1), welcher auf dem Sitz anzuordnen und zu befestigen ist,
ein Stützbein (20), welches auf der vorderen Seite des Basiskörpers (1) angebracht ist, um so den vorderen Abschnitt des Basiskörpers (1) auf dem Boden des Fahrzeugs abzustützen, wobei das Stützbein (20) eine sich vertikal erstreckende Rohrhalterung (45), welche an einem Fußrohr (41) des Stützbeins (20) befestigt ist, und ein Einstellungsrohr (47), welches gleitend in der Rohrhalterung (45) angebracht ist, umfasst, wobei ein Fuß (49) an einem unteren Ende des Einstellungsrohrs (47) befestigt ist, wobei die Höhe des Stützbeins (20) in mehreren Stufen einstellbar ist, und
einen Einstellungsmechanismus (50), um die Höhe des Stützbeins (20) auf einer der mehreren Stufen zu fixieren,
**dadurch gekennzeichnet,**
**dass** der Einstellungsmechanismus (50) eine Fußverriegelungsbasis (51), welche an dem Fußrohr (41) des Stützbeins (20) befestigt ist, einen Fußverriegelungshebel (53), welcher an der Fußverriegelungsbasis (51) angebracht ist, damit sie zu der Rohrhalterung (45) hin und von der Rohrhalterung (45) weg gleiten kann, einen Verriegelungsstift (55), welcher integral mit dem Fußverriegelungshebel (53) befestigt ist, und eine Feder (57), welche in einer zusammengedrückten Form zwischen der Fußverriegelungsbasis (51) und dem Fußverriegelungshebel (53) angeordnet ist und den Fußverriegelungshebel (53) und den Verriegelungsstift (55) zu der Rohrhalterung (45) hin drängt, umfasst,
wobei die Fußverriegelungsbasis (51) einen Vorsatz (51b) und der Fußverriegelungshebel (53) einen Vorsatz (53b) aufweist,
wobei der Verriegelungsstift (55) in einem verriegelten Zustand zusammen mit dem Fußverriegelungshebel (53) durch die Vorspannkraft der Feder (57) zu der Rohrhalterung (45) hin gedrückt wird, so dass ein vorderes Ende (55a) des Verriegelungsstifts (55) durch ein Loch (45a) der Rohrhalterung (45) und durch eines von mehreren Einstellungslöchern (47-1 ... 47-5) des Einstellungsrohrs (47) hervorragt, um die Höhe des Stützbeins (20) in einer der mehreren Stufen einzustellen und zu fixieren, und
wobei der verriegelte Zustand lösbar ist, indem der Fußverriegelungshebel (53) von der Rohrhalterung (45) weg bewegt wird während die Vorsätze (51 b, 53b) der Fußverriegelungsbasis (51) und des Fußverriegelungshebel (53) zusammengedrückt werden, um so den Verriegelungsstift (55) aus dem entsprechenden Einstellungsloch (47-1 ... 47-5) des Einstellungsrohrs (47) und aus dem Loch (45a) der Rohrhalterung (45) zu lösen.

2. Kindersitzbasis nach Anspruch 1,
**dadurch gekennzeichnet,**
**dass** der Verriegelungsstift (55) innerhalb der Fußverriegelungsbasis (51) und des Fußverriegelungshebels (53) angeordnet ist.

3. Kindersitzbasis nach Anspruch 1 oder Anspruch 2,
**dadurch gekennzeichnet,**
**dass** der Verriegelungsstift (55) durch Stützenden (51a, 51c) der Fußverriegelungsbasis (51) gestützt wird.

4. Kindersitzbasis nach einem der vorhergehenden Ansprüche,
**dadurch gekennzeichnet,**
**dass** die Feder (57) an dem Verriegelungsstift (55) angebracht ist.

5. Kindersitzbasis nach Anspruch 3 und Anspruch 4,
**dadurch gekennzeichnet,**
**dass** die Feder (57) in der zusammengedrückten Form zwischen einem der Stützenden (51a) der Fußverriegelungsbasis (51) und dem Fußverriegelungshebel (53) aufgenommen ist.

6. Kindersitz mit einer Kindersitzbasis nach einem der vorhergehenden Ansprüche.

## Revendications

1. Support pour siège d'enfant, pour fixer un siège d'enfant sur un siège d'un véhicule, ledit support pour siège d'enfant comprenant :
un corps de base (1), à placer et fixer sur le siège ;
un corps support (20), monté sur le côté avant dudit corps de base (1), de manière à faire porter la partie avant dudit corps de base (1) sur le plancher du véhicule, le corps support (20) comprenant un support de tube (45) s'étendant verticalement, fixé à un tube de pied (41) du corps support (20), et un tube d'ajustement (47), monté à coulissement dans le support de tube (45), un pied (49) étant fixé à une extrémité inférieure du tube d'ajustement (47), dans lequel la hauteur du corps support (20) est ajustable à une pluralité de niveaux, et
un mécanisme de positionnement (50), pour verrouiller la hauteur du corps support (20) à l'un de la pluralité de niveaux,
**caractérisé en ce que**
le mécanisme de positionnement (50) comprend une base de verrouillage de pied (51), fixée au tube de pied (41) du corps support (20), un levier de verrouillage de pied (53) monté sur la base de verrouillage de pied (51) de manière à pouvoir coulisser en se rapprochant du support de tube (45) et en s'écartant du support de tube (45), une tige de verrouillage (55) fixée solidairement au levier de verrouillage de pied (53), et un ressort (57) disposé sous une forme comprimée entre la base de verrouillage de pied (51) et le levier de verrouillage de pied (53) et sollicitant le levier de verrouillage de pied (53) et la tige de verrouillage (55) vers le support de tube (45),
dans lequel la base de verrouillage de pied (51) comprend une oreille (51b), et le levier de verrouillage de pied (53) comprend une oreille (53b),
dans lequel, dans un état verrouillé, la tige de verrouillage (55) est pressée vers le support de tube (45), conjointement avec le levier de verrouillage de pied (53), par la force de sollicitation du ressort (57), de manière qu'une extrémité avant (55a) de la tige de verrouillage (55) fasse saillie à travers un trou (45a) du support de tube (45) et l'un, d'une pluralité de trous de positionnement (47-1 .. 47-5) du tube d'ajustement (47), de manière à ajuster et verrouiller la hauteur du corps support (20), à l'un de la pluralité de niveaux, et
dans lequel l'état verrouillé est déverrouillable en coulissant le levier de verrouillage de pied (53) en l'écartement du support de tube (45), tout en pinçant les oreilles (51b, 53b) de la base de verrouillage de pied (51) et du levier de verrouillage de pied (53), de manière à dégager la tige de verrouillage (55) du trou de positionnement (47-1 .. 47-5) correspondant du tube d'ajustement (47) et du trou (45a) du support de tube (45).

2. Support pour siège d'enfant selon la revendication 1,
dans lequel la tige de verrouillage (55) est placée à l'intérieur de la base de verrouillage de pied (51) et du levier de verrouillage de pied (53).

3. Support pour siège d'enfant selon la revendication 1 ou la revendication 2,
dans lequel la tige de verrouillage (55) est supportée par des extrémités support (51a, 51c) de la base de verrouillage de pied (51).

4. Support pour siège d'enfant selon l'une quelconque des revendications précédentes,
dans lequel le ressort (57) est monté sur la tige de verrouillage (55).

5. Support pour siège d'enfant selon la revendication 3 et la revendication 4,
dans lequel le ressort (57) est incorporé sous la forme comprimée, entre l'une des extrémités support (51 a) de la base de verrouillage de pied (51) et du levier de verrouillage de pied (53).

6. Siège d'enfant, comprenant un support pour siège d'enfant selon l'une des revendications précédentes.
